## Europäisches Patentamt

## European Patent Office

## Office européen des brevets

(11) veröffentlichungsnummer: **0 016 339**
A1

# (12) EUROPÄISCHE PATENTANMELDUNG

(21) Anmeldenummer: **80100784.0**

(22) Anmeldetag: **15.02.80**

(51) Int. Cl.³: **G 01 N 21/55**

(30) Priorität: **15.03.79 DE 2910240**

(43) Veröffentlichungstag der Anmeldung:
**01.10.80 Patentblatt 80/20**

(84) Benannte Vertragsstaaten:
**AT BE CH DE FR GB IT NL SE**

(71) Anmelder: **Bartke, Rolf, Dr.**
**Sybelstrasse 31**
**D-4000 Düsseldorf(DE)**

(72) Erfinder: **Bartke, Rolf, Dr.**
**Sybelstrasse 31**
**D-4000 Düsseldorf(DE)**

(74) Vertreter: **Schmidt-Evers, Jürgen et al,**
**Patentanwälte Dipl.-Ing.H.Mitscherlich**
**Dipl.-Ing.K.Gunschmann Dr.rer.nat.W.Körber**
**Dipl.-Ing.J.Schmidt-Evers**
**Steinsdorfstrasse 10 D-8000 München 22(DE)**

(54) **Vorrichtung zur Ermittelung des Reflexionsvermögens der Oberfläche eines Messobjektes.**

(57) Zur Ermittelung des Reflexionsvermögens der Oberfläche eines Meßobjektes (19) wird Licht einer normalen breitbandigen Lichtquelle (10) auf die zu messende Oberfläche (18) gelenkt. Das reflektierte Licht wird auf eine Fotodetektoreinrichtung (25) gelenkt, die aus zwei dicht nebeneinander liegenden Fotodetektoren (27, 28) besteht. Jeder der beiden Fotodetektoren ist durch ein Schmalbandfilter (29,30) abgedeckt. Die beiden Schmalbandfilter sind für Licht unterschiedlicher Wellenlängen durchlässig. Die beiden Wellenlängen sind so gewählt, daß sie von der zu messenden Oberfläche unterschiedlich absorbiert werden. Aus dem Absorptionsunterschied der beiden Lichtstrahlen wird das Meßergebnis abgeleitet. Dadurch, daß die Fotodetektoren eng beieinanderliegen, unterliegen sie im wesentlichen den gleichen Bedingungen, insbesondere dem gleichen Temperatureinfluß. Auf diese Weise werden Meßungenauigkeiten weitgehend ausgeschlossen. Die Fotodetektoren können außerdem noch künstlich auf der gleichen Temperatur gehalten werden, beispielsweise durch eine Kühleinrichtung (31).

FIG. 1

Vorrichtung zur Ermittelung des Reflexionsvermögens der Oberfläche eines Meßobjekts

Die Erfindung bezieht sich auf eine Vorrichtung zur Ermittelung des Reflexionsvermögens der Oberfläche eines Meßobjekts, insbesondere zur Bestimmung von mit diesem Reflexionsvermögen zusammenhängenden Eigenschaften des Meßobjekts, mit einer Lichtquelle, die an die Oberfläche des Meßobjekts Licht abgibt, mit einer Lichtaufnahmeeinrichtung, die zumindest das von der Oberfläche des Meßobjekts reflektierte Licht aufnimmt und einer Photodetektoreinrichtung zur Auswertung zuführt, und mit Filterelementen, die lediglich Lichtstrahlen unterschiedlicher Wellenlänge für die Auswertung durch die Photodetektoreinrichtung wirksam werden lassen.

Eine Vorrichtung der vorstehend bezeichneten Art ist bereits vorgeschlagen worden. Bei dieser Vorrichtung wird von einer sogenannten Breitband-Lichtquelle Licht durch eine rotierende Filterscheibe geleitet, die zwei Filter enthält, welche für Licht unterschiedlicher Wellenlängen durchlässig sind. Von der Filterscheibe wird jeweils nur ein Lichtstrahl einer Wellenlänge weitergeleitet. Dieser Lichtstrahl wird mittels eines Umlenkspiegels auf das Meßobjekt umgelenkt, von dessen Oberfläche der Lichtstrahl fächerartig reflektiert wird. Dieses fächerartig reflektierte Licht wird mittels eines konkaven Spiegels auf einen Fotodetektor zur Auswertung geleitet. Die beiden Filter sind hinsichtlich ihrer Lichtdurchlässigkeit so gewählt, daß Licht der einen Wellenlänge von der bestrahlten Oberfläche des Meßobjekts absorbiert wird, während Licht der anderen Wellenlänge nicht absorbiert wird. Wenn beispielsweise die Feuchtigkeit an der Oberfläche eines Festkörpers gemessen werden soll, so muß das eine Filter Licht solcher Wellenlänge durchlassen, das von Wasser absorbiert wird. Die Wellenlänge des von dem anderen Filter durchgelassenen Lichts muß so gewählt sein, daß dieses Licht von Wasser nicht absorbiert wird. Aus dem Absorptionsunterschied der beiden Lichtstrahlen kann dann das Meßergebnis abgeleitet werden.

Von Nachteil bei der vorstehend betrachteten vorgeschlagenen Vorrichtung ist, daß die Vorrichtungsparameter nicht stabil sind und zu Meßungenauigkeiten führen können. So können beispielsweise die verwendeten Filter unter Temperatureinfluß Änderungen hinsichtlich der Wellenlänge erfahren, mit der sie lediglich Licht durchlassen. Auch der verwendete Detektor besitzt ein temperaturabhängiges Verhalten.

Zur Überwindung der vorstehend aufgezeigten Schwierigkeiten ist es bereits bekannt (DE-OS 28 16 541), bei einer Vorrichtung der betrachteten Art von der Breitband-Lichtquelle noch einen zweiten Lichtstrahl abzuleiten, der ebenfalls durch die vorgesehene Filterscheibe geleitet wird, jedoch mit Abstand und parallel zu dem Lichtstrahl, der dem Meßobjekt zugeführt wird. Der zweite Lichtstrahl ist abwechselnd durch Licht der einen Wellenlänge und durch Licht der anderen Wellenlänge (entsprechend den Durchlaßwellenlängen der beiden Filter) gebildet, und zwar wie der auf das Meßobjekt gerichtete Lichtstrahl. Die Anordnung ist dabei so getroffen, daß dann, wenn der auf das Meßobjekt gerichtete Lichtstrahl durch Licht der einen Wellenlänge gebildet ist, der zweite Lichtstrahl durch Licht der anderen Wellenlänge gebildet ist und umgekehrt. Auf diese Weise erhält der Detektor nacheinander vier unterschiedliche Lichtstrahlen. Die Auswertung dieser vier Lichtstrahlen erlaubt zwar Änderungen in den Parametern der Vorrichtung zu eliminieren. Von Nachteil ist jedoch auch bei dieser bekannten Vorrichtung der relativ hohe konstruktive Aufwand sowie die Verwendung einer anzutreibenden Filterscheibe.

Ausgehend von einer Vorrichtung der gerade betrachteten Art ist auch schon vorgeschlagen worden, von der vorgesehenen Breitband-Lichtquelle einen einzigen Lichtstrahl durch die als Filterrad ausgebildete Filterscheibe hindurchzuleiten, welche wiederum mit zwei Filtern ausgestattet ist, die Licht unterschiedlicher Wellenlängen durchlassen. Der durch das Filterrad jeweils hindurchgelangende eine Lichtstrahl ist dann abwechselnd durch Licht der einen Wellenlänge und durch Licht der anderen Wellenlänge gebildet. Der das Filterrad verlassende Lichtstrahl wird sodann auf einen halbdurchlässigen Spiegel gelenkt, der einen Teil des Lichtes auf das Meßobjekt und einen weiteren Teil des Lichts auf einen Referenzdetektor leitet. Das von der Oberfläche des Meßobjekts reflektierte Licht wird mittels eines Hohlspiegels auf einen Meßdetektor geleitet. Der Meßdetektor und der Referenzdetektor erhalten somit abwechselnd Licht unterschiedlicher Wellenlänge zugeführt. Die Meßergebnisse der beiden Detektoren dienen zum einen der Auswertung des bei den beiden Lichtstrahlen mit unterschiedlicher Wellenlänge ermittelten unterschiedlichen Reflexionsvermögens der Oberfläche

-4-

des Meßobjekts, und zum anderen dienen die betreffenden Meßergebnisse der Eliminierung von Schwankungen in den Parametern der Vorrichtung. Obwohl bei dieser Vorrichtung Lichtstrahlen gleicher Wellenlänge gleichzeitig zur Messung und zur Referenzbildung verwendet werden, ist jedoch auch hier die Verwendung einer Filterscheibe infolge des damit verbundenen relativ hohen konstruktiven Aufwands von Nachteil.

Der Erfindung liegt demgemäß die Aufgabe zugrunde, einen Weg zu zeigen, wie bei einer Vorrichtung der eingangs genannten Art mit geringerem konstruktiven Aufwand ausgekommen werden kann als bei den zuvor betrachteten Vorrichtungen.

Gelöst wird die vorstehend aufgezeigte Aufgabe bei einer Vorrichtung der eingangs genannten Art erfindungsgemäß dadurch, daß die Lichtquelle und der von dieser zu der Oberfläche des Meßobjekts hin verlaufende Lichtweg so ausgelegt sind, daß auf die betreffende Oberfläche ein breitbandiger Lichtstrahl auftrifft, daß die Fotodetektoreinrichtung zwei gesonderte Fotodetektoren enthält und daß diese Fotodetektoren von in ihrer relativen Lage zu den Fotodetektoren fest angeordneten Schmalbandfiltern abgedeckt sind, die für Licht unterschiedlicher Wellenlängen durchlässig sind.

Die Erfindung bringt den Vorteil mit sich, daß mit geringerem konstruktiven Aufwand als bei den vorstehend betrachteten bekannten bzw. vorgeschlagenen Vorrichtungen ausgekommen werden kann, um das Reflexionsvermögen der Oberfläche eines Meßobjekts zu ermitteln und daraus insbesondere mit diesem Reflexionsvermögen zusammenhängende Eigenschaften des Meßobjekts zu bestimmen. Überdies ist in vorteilhafter Weise eine kon-

0016339

tinuierliche Messung an dem jeweiligen Meßobjekt möglich. Durch die Ermittelung des Reflexionsvermögens der Oberfläche eines Meßobjekts kann beispielsweise dessen Oberflächenfeuchtigkeit festgestellt werden. Bei vielen Stoffen, wie z. B. Tabak, Holz, Mehl, Milchpulver, etc. und bei fast allen granulierfähigen Materialien ist die Oberflächenfeuchtigkeit repräsentativ für die Gesamtfeuchtigkeit des jeweiligen Stoffes. In vorteilhafter Weise kann die Ermittelung des Reflexionsvermögens der Oberfläche eines Meßobjekts auch zur Fettbestimmung von Stoffen herangezogen werden, und zwar dann, wenn die Oberflächenfettschicht des jeweiligen Stoffes repräsentativ ist für den Gesamtfettgehalt dieses Stoffes. Dies ist z. B. bei Kakao, Milchpulver, etc. der Fall. In gleicher Weise kann der Proteingehalt von Stoffen, wie von Weizen und Mehl, festgestellt werden. Voraussetzung für eine sichere Bestimmung ist allerdings eine Homogenisierung des jeweils zu untersuchenden Stoffes.

Ist das Reflexionsvermögen der Oberfläche von festen oder flüssigen Meßobjekten zu ermitteln, die von Licht durchstrahlbar sind, so werden diese Meßobjekte vorzugsweise von einem Licht reflektierenden Träger aufgenommen. Bei derartigen Meßobjekten kann es sich beispielsweise um Klarsichtfolien handeln, die auf ihren Feuchtigkeitsgehalt hin zu überprüfen sind, oder sogar um Flüssigkeiten.

In vorteilhafter Weise sind die Fotodetektoren unmittelbar nebeneinander angeordnet. Hierdurch ergibt sich ein besonders einfacher und kompakter Aufbau der Vorrichtung.

Vorzugsweise sind die Fotodetektoren mit einer Kühl-

-6-

einrichtung verbunden. Dies bringt den Vorteil einer hohen Temperaturkonstanz der Fotodetektoren mit sich.

Vorzugsweise sind auch die Schmalbandfilter mit der Kühleinrichtung verbunden. Dies gewährleistet in vorteilhafter Weise eine besonders hohe Temperaturkonstanz beim Betrieb der Vorrichtung.

Vorzugsweise ist an den Ausgängen der beiden Fotodetektoren eine elektronische Auswerteeinrichtung angeschlossen, in der die Ausgangssignale der beiden Fotodetektoren unter Lieferung entsprechender Ausgangssignale miteinander vergleichbar sind. Hierdurch ergibt sich der Vorteil, daß auf besonders einfache Weise die Ausgangssignale der Fotodetektoren zur Lieferung der entsprechenden Ausgangssignale verarbeitet werden können. Im Zuge des erwähnten Vergleichs wird dann praktisch die Energie des mit der einen Wellenlänge aufgenommenen Lichtes zur Energie des mit der anderen Wellenlänge aufgenommenen Lichtes in Beziehung gesetzt, beispielsweise durch Ausführung einer Quotientenbildung. Das dabei jeweils erzielte Ausgangssignal kann zur Anzeige der Eigenschaften herangezogen werden, die mit dem ermittelten Reflexionsvermögen der Oberfläche des jeweiligen Meßobjekts zusammenhängen.

Zweckmässigerweise ist in dem Lichtweg von der Lichtquelle zu der Oberfläche des Meßobjekts ein Umlenkspiegel vorgesehen. Hierdurch ergibt sich der Vorteil einer relativ geringen Bauhöhe für die Vorrichtung.

Eine besonders geringe Bauhöhe der Vorrichtung ist dann möglich, wenn in dem Lichtweg von der Oberfläche des Meßobjekts zu den Fotodetektoren ein Hohlspiegel vorgesehen ist.

Anhand von Zeichnungen wird die Erfindung nachstehend beispielsweise näher erläutert.

Fig. 1 zeigt schematisch in einer Schnittansicht eine Vorrichtung gemäß der Erfindung.

Fig. 2 zeigt schematisch in einer vergrößerten Ansicht eine bei der Vorrichtung gemäß Fig. 1 vorgesehene Fotodetektoreinrichtung.

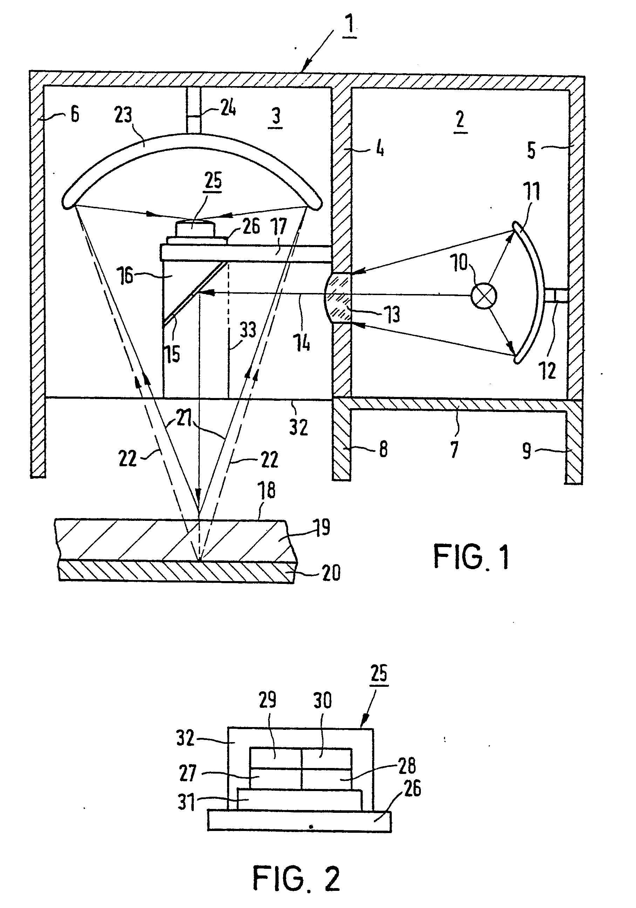

In Fig. 1 ist eine Ausführungsform der Vorrichtung gemäß der Erfindung generell mit 1 bezeichnet. Diese Vorrichtung 1 enthält im wesentlichen ein behälterartiges Gehäuse mit zwei Kammern 2, 3. Gemäß Fig. 1 ist das betreffendeGehäuse durch zwei Außenwände 5 bzw. 6 begrenzt. Durch eine Trennwand 4 ist der in dem Gehäuse befindliche Raum in die beiden Kammern 2, 3 aufgeteilt. Die Kammer 2 ist an ihrer Unterseite mittels einer Platte 7 verschlossen, die mit zwei Tragplatten 8, 9 verbunden ist.

In der Kammer 2 befindet sich eine lediglich schematisch angedeutete Lichtquelle 10, bei der es sich beispielsweise um eine Wolframfadenlampe handeln mag; sie kann dauernd oder pulsierend betrieben sein. Die Lichtquelle 10 gibt breitbandiges Licht ab, d. h. Licht mit vielen Wellenlängen. Dieses Licht wird mittels eines Hohlspiegels 11 zu einem Kondensor 13 hingeleitet, der sich in der Wand 4 befindet. Der Hohlspiegel 11 ist mittels einer Befestigungs- und Einstelleinrichtung 12 an der Wand 5 befestigt.

In der Kammer 3 des in Fig. 1 dargestellten Gehäuses ist eine an der Wand 4 befestigte Traganordnung 17 vorgesehen, an der im unteren Teil ein Umlenkspiegel 15 über eine Befestigungseinrichtung 16 angebracht ist. Die vorzugsweise durch einen Tragarm gebildete Traganordnung 17 trägt auf ihrer Oberseite eine Fotodetektoreinrichtung 25, die beispielsweise auf einer Auswerteeinrichtung 26 angeordnet sein mag.

In der Kammer 3 befindet sich ferner ein konkaver Hohlspiegel 23, der oberhalb der Fotodetektoreinrichtung 25 vorgesehen ist. Dieser Hohlspiegel 23 ist über eine Halte- und Einstelleinrichtung 24 an der Oberseite des dargestellten Behälters angebracht.

Im Bereich der offenen Unterseite der Kammer 3 des in Fig. 1 dargestellten Gehäuses ist das hinsichtlich des Reflexionsvermögens seiner Oberfläche 18 zu überprüfende Meßobjekt 19 vorgesehen. Die Kammer 3 ist durch eine lichtdurchlässige Scheibe 32 abgeschlossen. Zur Vermeidung von störenden Reflexionen an dieser Scheibe ist der Umlenkspiegel 15 von einem Tubus 33 umgeben, der bis zu dieser Scheibe 32 hinunterreicht und eine Öffnung in Richtung des Kondensators 13 besitzt. Das Meßobjekt 19 wird im Falle seiner Durchstrahlbarkeit von einem reflektierenden Träger 20 aufgenommen.

Wie aus Fig. 1 ersichtlich ist, gelangt der aus dem Kondensor 13 austretende breitbandige Lichtstrahl 14 nach Umlenkung an dem Umlenkspiegel 15 zur Oberfläche 18 des Meßobjekts 19 hin. Von dieser Oberfläche 18 des Meßobjekts 19 oder von dem Träger 20 wird der betreffende Lichtstrahl mehr oder weniger stark gefächert zu dem Hohlspiegel 23 hin reflektiert (und zwar entweder entsprechend dem Strahlengang 21 von der Oberfläche 18 des Meßobjekts oder entsprechend dem Strahlengang 22 von der Oberfläche des reflektierenden Trägers 20); von dem Hohlspiegel 23 werden die betreffenden Lichtstrahlen zu der Fotodetektoreinrichtung 25 hin geleitet.

0016339

In Fig. 2 ist schematisch der nähere Aufbau der Fotodetektoreinrichtung 25 gezeigt. Die Fotodetektoreinrichtung 25 enthält zwei unmittelbar nebeneinander angeordnete Fotodetektoren 27, 28, deren einer als Meßdetektor und deren anderer als Referenzdetektor dient.
Jeder dieser beiden Fotodetektoren 27, 28 ist von einem
Schmalbandfilter 29 bzw. 30 abgedeckt, welches Licht
lediglich eines relativ schmalen Wellenlängenbereichs
durchläßt. Die beiden Schmalbandfilter sind dabei für
Licht unterschiedlicher Wellenlängen durchlässig.

Die beiden Fotodetektoren 27 und 28 sind mit einer
Kühleinrichtung 31 verbunden, mit der somit auch die
Schmalbandfilter 29, 30 verbunden sind. Durch diese
Kühleinrichtung 31 ist - wie oben bereits erwähnt -
ein Betrieb mit hoher Temperaturkonstanz gewährleistet.

Dabei ist noch zu berücksichtigen, daß durch die Verwendung der nicht rotierenden, in ihrer relativen Lage
zu den Fotodetektoren 27, 28 fest angeordneten Schmalbandfilter 29, 30 überhaupt erst eine Temperaturkompensation bzw. -konstanthaltung möglich ist.

Die im Zusammenhang mit Fig. 1 bereits erwähnte und
in Fig. 2 lediglich schematisch angedeutete elektronische Auswerteeinrichtung 26 ist mit ihren Eingängen
an den Ausgängen der beiden Fotodetektoren 27, 28 angeschlossen. Die elektronische Auswerteeinrichtung 26
vergleicht die ihr von den Fotodetektoren 27, 28 zugeführten Ausgangssignale miteinander und gibt daraufhin entsprechende Ausgangssignale ab. Mit anderen Worten ausgedrückt heißt dies, daß durch die elektronische
Auswerteeinrichtung die Energiepegel von Lichtstrahlen
unterschiedlicher Wellenlängen miteinander in Beziehung
gesetzt werden, beispielsweise durch Quotientenbildung zwischen der Energie desjenigen Lichtes, welches von dem Meßdetektor aufgenommen worden ist, und der Energie des Lichtes, welches von dem Referenzdetektor aufgenommen worden ist. Das so von der Auswerteeinrichtung gewonnene Ausgangssignal kann dann zur Bestimmung von Eigenschaften des Meßobjekts herangezogen werden, die mit dessen Reflexionsvermögen zusammenhängen.

Bezüglich der in Fig. 2 dargestellten Detektoreinrichtung ist noch darauf hinzuweisen, daß deren Detektoren 27, 28, die Schmalbandfilter 29, 30 und die Kühleinrichtung 31 vorzugsweise von einem Gehäuse 32 umgeben sind, welches zumindest von der Oberseite her Licht auf die Fotodetektoren 27, 28 durch die Schmalbandfilter 29, 30 hindurch auftreffen läßt. Die in Fig. 2 unterhalb der Detektoreinrichtung 25 dargestellte Auswerteeinrichtung 26 kann auch an anderer Stelle angeordnet sein, wie beispielsweise außerhalb des in Fig. 1 dargestellten Gehäuses.

Ansprüche

1. Vorrichtung zur Ermittelung des Reflexionsvermögens der Oberfläche eines Meßobjekts, insbesondere zur Bestimmung von mit diesem Reflexionsvermögen zusammenhängenden Eigenschaften des Meßobjekts, mit einer Lichtquelle, die an die Oberfläche des Meßobjekts Licht abgibt, mit einer Lichtaufnahmeeinrichtung, die zumindest das von der Oberfläche des Meßobjekts reflektierte Licht aufnimmt und einer Fotodetektoreinrichtung zur Auswertung zuführt, und mit Filterelementen, die lediglich Lichtstrahlen unterschiedlicher Wellenlängen für die Auswertung durch die Fotodetektoreinrichtung wirksam werden lassen, dadurch gekennzeichnet, daß die Lichtquelle (10) und der von dieser zu der Oberfläche (18) des Meßobjekts (19) hin verlaufende Lichtweg so ausgelegt sind, daß auf die betreffende Oberfläche (18) ein breitbandiger Lichtstrahl (14) auftrifft, daß die Fotodetektoreinrichtung (25) zwei gesonderte Fotodetektoren (27, 28) enthält und daß diese Fotodetektoren (27, 28) von in ihrer relativen Lage zu den Fotodetektoren (27, 28) fest angeordneten Schmalbandfiltern (29; 30) abgedeckt sind, die für Licht unterschiedlicher Wellenlängen durchlässig sind.

2. Vorrichtung nach Anspruch 1, dadurch gekennzeichnet, daß von Licht durchstrahlbare feste oder flüssige Meßobjekte (19) von einem Licht reflektierenden Träger (20) aufgenommen sind.

-2-

3. Vorrichtung nach Anspruch 1 oder 2, dadurch gekennzeichnet, daß die Fotodetektoren (27, 28) unmittelbar nebeneinander angeordnet sind.

4. Vorrichtung nach einem der Ansprüche 1 bis 3, dadurch gekennzeichnet, daß die Fotodetektoren (27, 28) mit einer Kühleinrichtung (31) verbunden sind.

5. Vorrichtung nach Anspruch 4, dadurch gekennzeichnet, daß die Schmalbandfilter (29, 30) ebenfalls mit der Kühleinrichtung (31) verbunden sind.

6. Vorrichtung nach einem der Ansprüche 1 bis 5, dadurch gekennzeichnet, daß an den Ausgängen der beiden Fotodetektoren (27, 28) eine elektronische Auswerteeinrichtung (26) angeschlossen ist, in der die Ausgangssignale der beiden Fotodetektoren (27, 28) unter Lieferung entsprechender Ausgangssignale miteinander vergleichbar sind.

7. Vorrichtung nach einem der Ansprüche 1 bis 6, dadurch gekennzeichnet, daß in dem Lichtweg von der Lichtquelle (10) zu der Oberfläche (18) des Meßobjekts (19) ein Umlenkspiegel (15) vorgesehen ist.

8. Vorrichtung nach einem der Ansprüche 1 bis 7, dadurch gekennzeichnet, daß in dem Lichtweg von der Oberfläche (18) des Meßobjekts (19) zu den Fotodetektoren (27, 28) ein Hohlspiegel (23) vorgesehen ist.

FIG. 1

FIG. 2

**Office européen des brevets**

**RAPPORT DE RECHERCHE EUROPEENNE**

Numero de la demande

EP 80 10 0784

| | DOCUMENTS CONSIDERES COMME PERTINENTS | | |
|---|---|---|---|
| Catégorie | Citation du document avec indication. en cas de besoin, des parties pertinentes | Revendica-tion concernee | |
| | US - A - 3 981 590 (R. PERKINS) <br> * Spalte 2; Figur 1 * <br> -- | 1,6 | |
| | US - A - 3 821 550 (M. PRIEST) <br> * Spalte 2; Figur 1 * <br> -- | 1 | |
| A | US - A - 4 097 743 (R. CARLSON) <br> * Spalten 4,5,10; Figuren 1,11 * <br> -- | 1,7,8 | |
| A | CONTROL ENGINEERING, Band 15, Januar 1968, "Infrared radiation measures moisture", Seite 44 <br> * Das ganze Dokument * <br> -- | 1,7,8 | |
| A | US - A - 3 322 962 (H. MULLER) <br> * Spalte 2; Figur 1 * <br> -- | 1 | |
| A | US - A - 4 003 660 (J. CHRISTIE et al.) <br> * Spalten 5,6; Figur 1 * <br> ---- | 1-3 | |

**CLASSEMENT DE LA DEMANDE (Int. Cl. ⁴)**

G 01 N 21/55

**DOMAINES TECHNIQUES RECHERCHES (Int. Cl ⁴)**

G 01 N 21/55
        21/31
G 01 J   3/50
        1/16
B 07 C   5/342
G 01 J   3/46

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été etabli pour toutes les revendications

| Lieu de la recherche | Date d'achovement de la recherche | Examinateur |
|---|---|---|
| Den Haag | 24-06-1980 | BOEHM |

OEB Form 1503.1   06.78